# EUROPÄISCHE PATENTSCHRIFT

(11) **EP 1 983 203 B1**
(45) Veröffentlichungstag und Bekanntmachung des Hinweises auf die Patenterteilung: **04.09.2013**
(21) Anmeldenummer: 08007261.4
(22) Anmeldetag: 12.04.2008
(51) Int. Cl.: F16C 11/10, G01M 9/08

(54) **Vorrichtung zum Drehen und Klemmen beweglicher Klappen**
Device for rotating and clamping moveable flaps
Dispositif de rotation et de blocage de volets mobiles

(30) Priorität: 18.04.2007 DE 102007018189
(43) Veröffentlichungstag der Anmeldung: 22.10.2008
(73) Patentinhaber: EADS Deutschland GmbH, 85521 Ottobrunn (DE)
(72) Erfinder: Thanhofer, Helmut, 85586 Poing (DE); Janker, Helmut, 83052 Bruckmühl (DE); Palik, Manfred, 82538 Geretsried (DE)

(56) Entgegenhaltungen:
- DE-A1-102004 063 774
- US-A- 3 731 546

## Beschreibung

Die Erfindung betrifft eine Einrichtung gemäß dem Oberbegriff des Patentanspruchs 1.

Scharniere sind als Einrichtung zum Verdrehen zweier beweglicher Klappen um eine Drehachse bekannt. Scharniere bestehen üblicherweise aus zwei Buchsen, welche jeweils mit einer Klappe fest verbunden sind und einer Achse, welche die beiden Buchsen entlang der Drehachse verbindet. Nachteilig bei bekannten Scharnieren ist das Feststellen der beweglichen Klappen bei einem vorgebbaren Winkel zueinander. Dies kann üblicherweise mittels Schraubverbindungen durch eine Buchse und die Achse oder entsprechende die beiden Klappen verbindenden Winkelstücke erfolgen.

DE 10 2004 063 774 A1 beschreibt ein stufenlos blockierbares Scharnier mit zwei Metallscheiben und einem zwischen den beiden Metallscheiben angeordneten Spreizring aus Gummi. Auf dem Spreizring liegt eine Scheibe auf, die mit einem Zugbolzen versehen ist, so dass durch Betätigen eines Exzenterkipphebels die Scheibe auf den Spreizring gedrückt wird, der Spreizring expandiert und an die innere Wandung des Scharnieroberteils gepresst wird.

In der Luftfahrt sind Einrichtungen zum Verdrehen beweglicher Klappen beispielsweise bei einer Flügel-Landeklappenanordnung bekannt. Diese Anordnung zeichnet sich im Wesentlichen durch einen komplizierten Aufbau mehrerer Hebel und Gelenke aus, welche den Flügel mit der Klappe verbinden. Diese Anordnung wird üblicherweise mit Hydraulikzylindern oder mittels eines Elektromotors mit einem hohen Drehmoment angetrieben. Der Motor ist in der Lage durch das hohe Drehmoment den Hebel-Gelenk-Aufbau zu blockieren und so ein Feststellen der Klappe in einer vorgebbaren Winkelposition zum Flügel zu erreichen.

Im Modellbau bei z.B. Flugzeuge, Schiffe etc. werden kleine Hebelkonstruktionen, Drehwellen o.ä. verwendet, welche mit im Rumpf oder Flügel angeordneten Servomotoren angetrieben werden. Diese Servomotoren sind üblicherweise so ausgelegt, dass sie die auf die Klappen oder Ruder wirkenden äußeren Kräfte halten können. Somit ist ein stufenloses Verstellen der Klappen möglich. Das Feststellen der Klappen in einer bestimmten Winkelposition erfolgt durch das Drehmoment des Servomotors.

Bei Windkanalmodellen tritt allerdings das Problem auf, dass selbst kleinste Hebelkonstruktionen aufgrund des geringen Platzangebots meist nicht realisierbar sind. Auch lassen sich aufgrund des geringen verfügbaren Platzes im Rumpf des Windkanalmodells oft keine geeigneten Servomotoren einbauen. Üblicherweise werden bei Windkanalmodellen die zu untersuchenden Klappenstellungen manuell eingestellt, wobei mit Schraubverbindungen die Klappe in der entsprechenden Position fixiert wird. Ein stufenloses Verstellen der Klappe ist so kaum möglich. Bei Windkanalversuchen bedeutet dies für jede zu untersuchende Position ein Aus- und Einschalten, sowie ein Öffnen des Windkanals.

Es ist Aufgabe der Erfindung eine Vorrichtung anzugeben, mit welcher ein stufenloses Verdrehen und Klemmen zweier zueinander beweglicher Klappen auch bei geringem Platzangebot einfach möglich ist.

Diese Aufgabe wird mit der Vorrichtung gemäß den Merkmalen des Anspruchs 1 gelöst.

Die Klemmeinrichtung weist erfindungsgemäß eine entlang der Drehachse angeordnete Spannhülse auf. Diese Spannhülse ist gegen die erste Klappe, z.B. den Flügel oder gleichzeitig gegen die erste Klappe und die zweite bewegliche Klappe, z.B. Landeklappe spannbar. Um die Spanhülse gegen die Klappe oder Klappen zu spannen ist zweckmäßig ein Spanndorn vorhanden, welcher in die Spannhülse lösbar einbringbar ist. Das Einbringen des Spanndorns bewirkt ein Aufweiten der Spannhülse, wodurch diese gegen die Klappe oder die Klappen gespannt wird.

Im Weiteren werden ohne Beschränkung der Allgemeinheit die erste Klappe als Flügel und die zweite bewegliche Klappe als Ruder bezeichnet.

Die Verdreheinrichtung kann am Flügel oder am Ruder befestigt sein. Aus Gewichtsgründen ist die Welle der Verdreheinrichtung zweckmäßig am Flügel befestigt und gelagert. Erfindungsgemäß weist die Verdreheinrichtung eine um die Drehachse gelagerte antreibbare Welle auf. Die Welle ist dabei erfindungsgemäß mit dem Ruder (wenn die Welle am Flügel gelagert ist) oder dem Flügel (wenn die Welle am Ruder gelagert ist) über einen Mitnehmer verbunden. Diese Verbindung kann z.B. eine Niet-, Stift- oder Schraubverbindung sein, welche eine starre, aber lösbare Verbindung zwischen der Welle und dem Ruder oder Flügel herstellt.

Die Erfindung sowie weitere vorteilhafte Ausgestaltungen der Erfindungen werden im Folgenden anhand von Zeichnungen näher erläutert. Es zeigen
- Fig. 1: eine Schnittdarstellung durch eine Flügel-Ruderanordnung mit einer erfindungsgemäßen Vorrichtung zum Verdrehen und Klemmen des Ruders in einer beispielhaften Ausführungsform,
- Fig. 2: eine Explosionsdarstellung einer Flügel-Ruderanordnung mit einer erfindungsgemäßen Vorrichtung zum Verdrehen und Klemmen des Ruders in einer beispielhaften Ausführungsform.

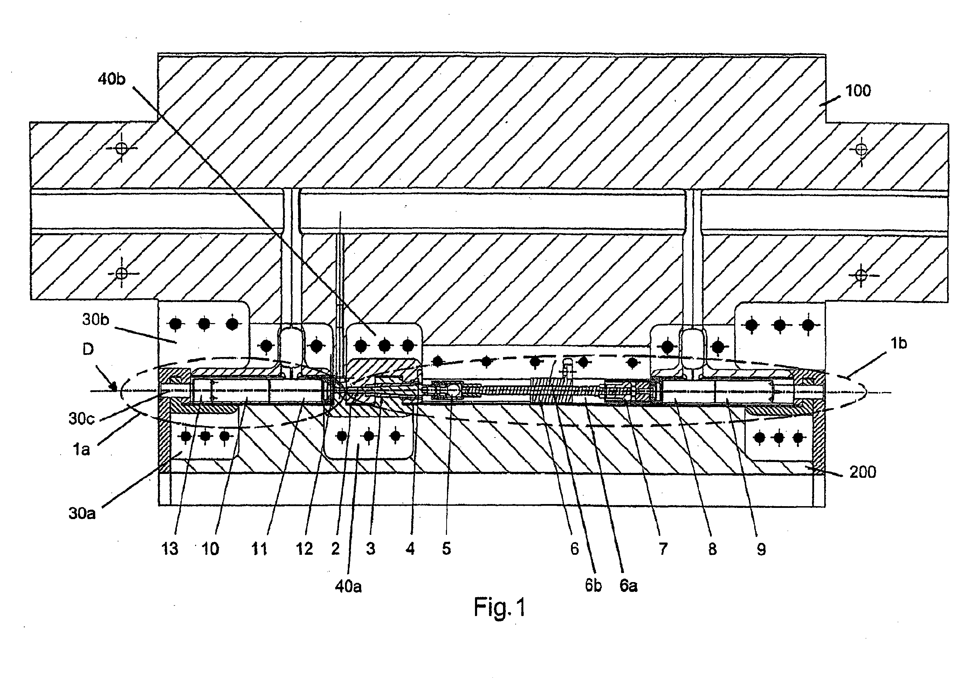

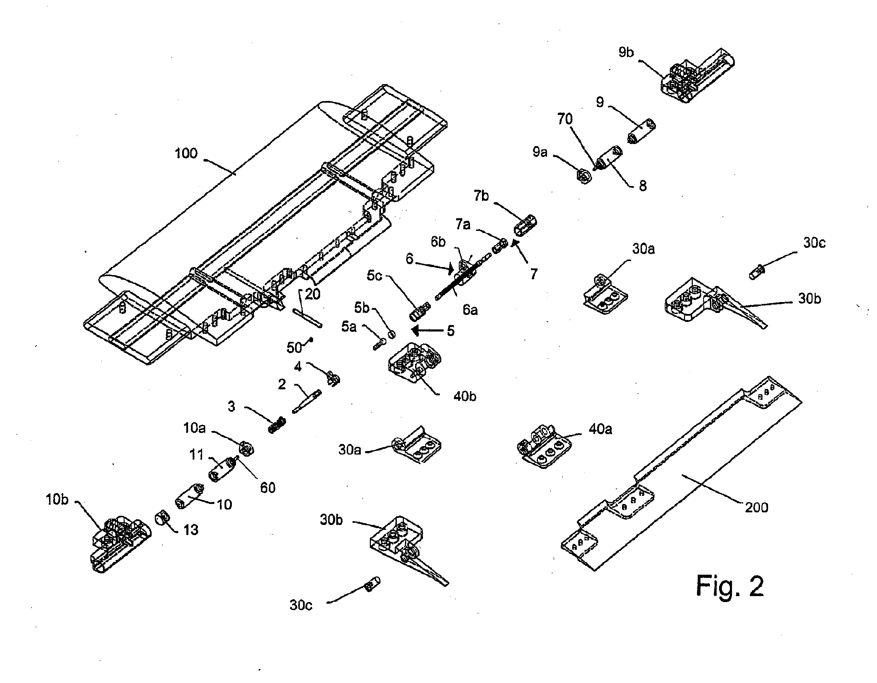

Fig. 1 zeigt eine Schnittdarstellung durch eine Flügel-Ruderanordnung mit einer erfindungsgemäßen Klemm- und Verdreheinrichtung. In Fig. 2 ist die erfindungsgemäße Vorrichtung als Explosionsdarstellung gezeigt. In den Figuren bedeuten gleiche Bezugszeichen jeweils gleiche Teile.

Die Darstellungen zeigen eine Klemm- und Verdreheinrichtung 1 b, 1 a, welche jeweils am Flügel 100 aufgehängt ist. Diese Anordnung ist aus mechanischen Gründen zu bevorzugen. Es ist aber durchaus möglich, die Klemm- und Verdreheinrichtung 1b, 1 a jeweils oder teilweise am Ruder 200 aufzuhängen. In diesem Fall sind allerdings die aufgrund des höheren Gewichts des Ruders 200 auftretenden größeren Hebelkräfte bei der Auslegung z.B. des Servomotors 9,10 oder der Getriebe 8, 11 zu berücksichtigen.

Die Darstellungen zeigen eine jeweils entlang der Drehachse D angeordnete Klemmeinrichtung 1b sowie eine Verdreheinrichtung 1a. Es ist allerdings möglich, die Einrichtungen derart anzuordnen, dass Teile der Klemm- und/oder Verdreheinrichtung 1b, 1a außerhalb der Drehachse D liegen. Dies kann z.B. durch geeignete Gelenke erfolgen, worauf weiter unten noch eingegangen wird.

Die Klemmeinrichtung 1 b basiert auf dem Prinzip, dass zum Klemmen ein Spanndorn 2 in eine Spannhülse 3 hineinbewegt wird. Dadurch wird die Spannhülse 3 geweitet und gegen das Ruder 200 oder gegen das Ruder 200 und den Flügel 100 gedrückt. Zweckmäßig wird die Spannhülse 3 gegen eine fest mit dem Ruder 200 und dem Flügel 100 verbundene Spannzange 40a, 40b gedrückt. Weiterhin kann eine Klemmung auch mittels einer losen Spannhülse 3, welche gleichzeitig gegen Flügel 100 und Ruder 200 drückt, erfolgen.

Die Spannzange besteht in geeigneter Weise aus einem ruderseitigen Spannbeschlag 40a und einem flügelseitigen Spannbeschlag 40b, welche jeweils eine Buchse mit einer Durchgangsbohrung entlang der Drehachse D aufweisen. Die beiden Spannbeschläge 40a, 40b sind jeweils am Flügel 100 und am Ruder 200 z.B. mittels einer Schraubverbindung befestigt, und weisen Ausnehmungen auf, so dass die beiden Beschläge 40a, 40b im bestimmungsgemäßen Aufbau von Flügel 100 und Ruder 200 ineinandergreifen, so dass die Bohrungen in den Buchsen der beiden Beschläge 40a, 40b eine durchgängige Bohrung entlang der Drehachse D bilden. Zweckmäßig greift dabei die Buchse des einen Beschlags 40a in die Ausnehmung des anderen Beschlags 40b ein.

Die Spannhülse 3 befindet sich vorteilhaft in der Bohrung der Buchse des am Ruder 200 befestigten Beschlags 40a. In einer weiteren Ausführungsform kann die Spannhülse 3 aber auch in einem Bereich der durchgängigen Bohrung angeordnet sein, so dass beim Weiten der Spannhülse 3 diese gegen das Ruder 200 und den Flügel 100 gespannt wird. Dadurch wird erreicht das sich im gespannten Zustand der Spannhülse 3 das auftretende Spiel in der Drehachse D verringert.

Die Klemmung der Spannhülse 3 gegen das Ruder 200 oder gegen den Flügel 100 und das Ruder 200 wird mittels eines Spanndorns 2 erreicht, welcher zur Klemmung der Spannhülse 3 in diese bis zu einem vorgebbaren Endanschlag hineinbewegt wird. Die Spannhülse 3 kann als hohlzylindrische Hülse mit geschlossenem Mantel ausgebildet sein. Im Bereich der konischen Enden wird die Hülse 3 beim Spannen elastisch verformt. Sind größere Spannkräfte erforderlich, so kann die Spannhülse 3 auch im Bereich der konischen Enden oder über die gesamte Länge axial geschlitzt sein, um größere Durchmesseränderungen für den Klemmvorgang zu ermöglichen. Der Innenkonus der Spannhülse 3 und der Außenkonus des Spanndorns 2 sind so gewählt, dass beim Erreichen des Endanschlags eine Drehung des Spanndorns 2 durch Reibschluss verhindert ist.

An der Spannhülse 3 ist vorteilhaft eine Verdrehsicherung 4 angebracht, welche verhindert, dass sich die Spannhülse 3 um die Drehachse D drehen kann, und sich am Flügel 100 abstützt. Hierfür kann am Flügel 100 z.B. eine Ausnehmung vorgesehen sein, in welche die Verdrehsicherung 4 eingreift. Die Verdrehsicherung 4 kann zweckmäßig eine Ausbuchtung sein, welche an der Außenseite der Spannhülse 3 ausgeführt ist.

Die Verdrehsicherung 4 kann aber auch ein Hülsenelement sein, welches entlang der Drehachse D mit der Spannhülse 3 verbunden ist und durch welches der Spanndorn 2 durchgreifen kann. Der Innendurchmesser des Hülsenelements 4 ist dabei zweckmäßig größer als der maximale Außendurchmesser des Spanndorns 2.

Eine Verdrehsicherung 4 ist nicht erforderlich und die Funktion einer Verdrehsicherung kann auch von der Spannhülse direkt übernommen werden, wenn diese zusätzlich gegen die Spannbeschläge 40a und 40b verspannt wird.

Die Bewegung des Spanndorns 2 wird zweckmäßig mittels eines aus einer Gewindespindel 6a mit einer schraubenförmigen Rille und einer Spindelmutter 6b bestehenden Kugelgewindetriebs 6 erreicht, welcher die rotatorische (drehende) Bewegung einer zweckmäßig für den Antrieb verwendeten Antriebswelle 70 eines Servomotors 9 in eine translatorische (lineare) Bewegung umsetzt.

Der Kugelgewindetrieb 6 ist am einen Ende über ein Kugel-Schubgelenk 5 mit dem Spanndorn 2 und am anderen Ende über ein Antriebsgelenk 7 mit der Antriebswelle 70 des Servomotors 9 verbunden. Mittels des Kugel-Schubgelenks 5 ist es möglich, Spannungen welche radial auf die Drehachse D wirken auszugleichen. Dadurch wird z.B. gewährleistet, dass Verkantungen des Spanndorns 2 beim Hineinbewegen in die Spannhülse 3 radial auf die Drehachse wirkende Kräfte, welche auf die Antriebswelle 70 des Servomotors 9 übertragen werden können, vermieden werden.

Das Kugel-Schubgelenk 5 besteht im Wesentlichen aus einer Gelenkkugel 5a, welche in ein einer Gelenkschale 5b beweglich gehalten ist, und sich in einem Gelenkgehäuse 5c befinden. Die Gelenkkugel 5a ist dabei zweckmäßig mit dem Spanndorn 2 und die Gelenkschale 5b mit dem Kugelgewindetrieb 6 oder umgekehrt verbunden.

Zum Antreiben der Klemmeinrichtung 1b ist am Flügel 100 ein Servomotor 9 befestigt, welcher zweckmäßig über ein Getriebe 8, z.B., ein Planetengetriebe mit dem Antriebsgelenk 7 verbunden ist. Die Anordnung aus Servomotor 9, welcher in einem Motorgehäuse 9b eingebracht ist und Getriebe 8 ist zweckmäßig mittels eines Motorträgers 9a, welcher sich am Flügel 100 abstützt, gelagert.

Das Antriebsgelenk 7 umfasst vorteilhaft ein Antriebsgehäuse 7b und ein in dem Gehäuse 7b verdrehsicher in Längsrichtung verschiebbar gelagertes Gelenk 7a. Das Gehäuse 7b ist zweckmäßig mit der Antriebswelle 70 des Servomotors 9 verbunden, das Gelenk 7a mit dem Kugelgewindetrieb 6.

Dabei entspricht insbesondere die Innenkontur des Gehäuses 7b der Außenkontur des Gelenkes 7a. So kann das Gehäuse 7b z.B. eine Innenkontur eines Sechskant aufweisen, in welcher das Gelenk 7a mit einer Außenkontur eines Sechskant verdrehsicher führbar ist. Das Gelenk 7a wird dabei zwischen einer ersten und zweiten Position in dem Gehäuse geführt. Mit dem Antriebsgelenk 7 wird die Linearbewegung des Spanndorns 2 durch den Kugelgewindetrieb 6 ausgeglichen, so dass ein kontinuierlicher Antrieb bei gleichzeitiger Linearbewegung des Spanndorns 2 möglich ist.

Fig. 1 zeigt eine erfindungsgemäße Klemmeinrichtung, bei welcher sämtliche Komponenten entlang der Drehachse D angeordnet sind. Es ist allerdings möglich, dass die Antriebswelle 70 des Elektromotors 9, der Elektromotor 9 selbst, das Antriebsgelenk 7, der Kugelgewindetrieb 6 und das Kugel-Schubgelenk 5 in einer Linie außerhalb der Drehachse D angeordnet sind. Um den mit dem Kugelgewindetrieb 6 verbundenen Spanndorn 2 in eine Linearbewegung zu versetzen kann zwischen Spanndorn 2 und Kugelgewindetrieb 6 z.B. eine biegsame Welle angeordnet sein.

Das Ruder 200 ist zweckmäßig an den beiden schmalen Enden mittels eines Beschlags 30a, 30b am Flügel 100 gelagert. Dieser Lagerbeschlag 30a, 30b basiert im Wesentlichen auf dem gleichen Prinzip wie der Spannbeschlag 40a, 40b, allerdings weist der Lagerbeschlag 30a, 30b in der durchgängigen Bohrungen durch den ruder- und flügelseitigen Teil des Beschlags einen Lagerbolzen 30c auf.

Im ungeklemmten Zustand sind alle Komponenten der Klemmeinrichtung 1 b, welche mit der Antriebswelle 70 verbunden sind, frei drehbar.

Die Fig. 1 und 2 zeigen zudem die erfindungsgemäße Verdreheinrichtung. Die Verdreheinrichtung 1 a umfasst einen Servomotor 10 mit einer Antriebswelle 60. Der Servomotor 10 ist zweckmäßig in einem Motorgehäuse 10b eingebracht. Die Verdreheinrichtung 1 a ist zweckmäßig am Flügel 100 befestigt und mittels eines Motorträgers 10a gelagert. Die Antriebswelle 60 ist insbesondere entlang der Drehachse D angeordnet. Zweckmäßig ist der Servomotor 10 ebenfalls in der Drehachse D angeordnet, es ist aber möglich, den Servomotor 10 außerhalb Drehachse D zu positionieren und die Antriebswelle 60 z.B. über eine biegsame Welle anzutreiben.

Zur Übertragung der Drehbewegung der Antriebswelle 60 auf das Ruder 200 ist ein entsprechender Formschluss oder ein Mitnehmer 50, z.B. eine Schraube oder ein Gewindestift vorgesehen, welcher die Antriebswelle 60 mit dem Ruder 200 verbindet. Dadurch ist es möglich, dass durch die Drehung der vom Servomotor 10 angetriebenen Antriebswelle 60 das Ruder 200 um die Drehachse D gedreht wird.

Zweckmäßig umfasst die Verdreheinrichtung eine mit dem Servomotor verbundene Einrichtung 13, mit welcher der Drehwinkel der Antriebswelle 60 bestimmt werden kann.

Außerdem sind zweckmäßig Mittel 20 vorhanden zur Bestimmung der Nulllage des Flügels zur Klappe. Hierzu ist im Flügel z.B. ein induktiver oder optischer Näherungsschalter 20 vorhanden. Am Ruder befindet sich bei Nulllage des Ruders zum Flügel gegenüber vom Näherungsschalter 20 ein entsprechendes Mittel, welches den Näherungsschalter auslöst. Dieses Mittel 20 kann z.B. fest mit der Antriebswelle 60 der Verdreheinrichtung 1a verbunden sein. Bei dem Mittel 20 kann es sich z.B. auch um eine mit der Antriebswelle 60 oder dem Kugel-Gewindetrieb 6 fest verbundenen Hülse handeln, welche bei einem optischen Näherungsschalter einen Hell-Dunkel-Übergang und bei einem induktiven Näherungsschalter einen Übergang eines nichtmagnetischen Materials zu einem magnetischen Material aufweist.

Zweckmäßig weist der Elektromotor 10 Mittel auf, welche eine Abschaltung des Elektromotors 10 bewirken, wenn das Drehmoment einen vorgebbaren Wert übersteigt. Dadurch wird die Zerstörung des Elektromotors und der Verdreheinrichtung verhindert, falls die Klemmeinrichtung in eine Position gebracht ist, in welcher der Spanndorn gegen die Spannhülse drückt und so eine Klemmung zwischen Ruder und Flügel erreicht ist.

Beim Betrieb der erfindungsgemäßen Vorrichtung wird zuerst die Klemmung gelöst, wobei der Spanndorn aus der Spannhülse hinausbewegt wird.

Anschließend wird mittels Ansteuerung des Servomotors der Verdreheinrichtung das Ruder in die gewünschte Winkelposition gestellt. In einem ersten Schritt wird das Ruder in Null-Lage bis zum Ansprechen des Näherungsschalters gebracht. Diese Position kann zweckmäßigerweise - um eine Mehrdeutigkeit zu vermeiden - außerhalb des Nennverstellbereichs (z.B. -30° bis 30°) bei z.B. -40° liegen. Nachdem die Null-Lage bestimmt ist, wird das Ruder zur Vermeidung von Hysteresefehlern (z.B. Ausgleich des Getriebespiels) über das andere Ende des Verstellbereichs hinaus bewegt. Danach wird erst die endgültige Winkelposition angefahren.

Unter dem Nennverstellbereich wird derjenige Winkelbereich verstanden, welchen die bewegliche zweite Klappe gegenüber der ersten Klappe abdecken soll. Die Null-Lage kann entweder oberhalb oder unterhalb dieses Nennverstellbereichs festgelegt werden.

Nach erfolgter Verstellung der Klappe wird die Klemmung wieder aktiviert, indem der Spanndorn in die Spannhülse mit definierter Kraft hineingedrückt wird. Der Klemmmotor wird auf eine maximale Stromstärke und somit auf ein maximales Drehmoment begrenzt. Die dadurch erreichte Dornposition dient als Nullreferenz der Klemmung. Weicht dieser Nullreferenzwert um eine bestimmte Größe beim nächsten Schließvorgang ab, so wird dies als Fehlerfall definiert und angezeigt.

Die elektrischen Komponenten der erfindungsgemäßen Vorrichtung können zweckmäßig über eine weite Entfernung elektronisch angesteuert werden ist. Diese Ansteuerung kann auch drahtlos erfolgen.

Zweckmäßig befindet sich die Steuerungshardware teilweise oder vollständig in unmittelbarer Nähe der Verstell- und Klemmeinrichtung.

## Patentansprüche

1. Vorrichtung zum Drehen und Verklemmen einer bezüglich einer ersten Klappe (100) um eine Drehachse D beweglichen zweiten Klappe (200) umfassend eine Verdreheinrichtung (1a) und eine Klemmeinrichtung (1 b),
**dadurch gekennzeichnet, dass**
die Klemmeinrichtung (1 b) eine gegen die erste Klappe (100) und zweite Klappe (200) spannbare oder eine gegen die zweite Klappe (200) spannbare und sich gegen die erste Klappe (100) abstützende oder eine gegen die erste Klappe (100) spannbare und sich gegen die zweite Klappe (200) abstützende und entlang der Drehachse D angeordnete Spannhülse (3) aufweist;
wobei die Klemmeinrichtung (1 b) einen in die Spannhülse (3) einführbaren Spanndorn (2) mit einem konischen Ende aufweist;
wobei der Spanndorn (2) ausgeführt ist, bei einer in die Spannhülse (3) einführenden Bewegung des konischen Endes eine
Durchmesserveränderung der Spannhülse hervorzurufen um das Verklemmen der zweiten Klappe (200) bezüglich der ersten Klappe (100) zu bewirken und
die Verdreheinrichtung (1a) eine an einer Klappe (100, 200) um die Drehachse D drehbar gelagerte antreibbare Welle (60) mit einem mit der anderen Klappe (200, 100) über einen Formschluss verbundenen Mitnehmer (50) aufweist.

2. Vorrichtung nach Anspruch 1, **dadurch gekennzeichnet, dass**
die Klemmeinrichtung (1 b) ferner einen antreibbaren Kugelgewindetrieb (6) mit einer Spindel (6a) und eine mit der Spannhülse (3) verbundene und sich an der ersten Klappe (100) abstützenden Verdrehsicherung (4) aufweist.

3. Vorrichtung nach Anspruch 2, dadurch gekerinzeichnet, dass
die Klemmeinrichtung (1 b) ferner ein Kugel-Schubgelenk (5) umfassend ein Gelenkgehäuse (5c) und eine in dem Gelenkgehäuse (5c) gelagerte Kugel (5a) aufweist, wobei die Kugel (5a) mit dem Spanndorn (2) und das Gelenkgehäuse (5c) mit dem Kugelgewindetrieb (6) oder umgekehrt verbunden ist.

4. Vorrichtung nach Anspruch 3, **dadurch gekennzeichnet, dass**
ein Elektromotor (9) mit einer Antriebswelle (70) zum Antreiben des Kugelgewindetriebs (6) vorhanden ist.

5. Vorrichtung nach Anspruch 4, **dadurch gekennzeichnet, dass**
die Klemmeinrichtung (1b) ferner ein Antriebsgelenk (7) umfassend ein Antriebsgehäuse (7b) und ein in dem Antriebsgehäuse (7b) verdrehsicher in Längsrichtung des Antriebsgehäuses (7b) verschiebbar gelagertes Gelenk (7a) aufweist, wobei das Gelenk (7a) mit der Spindel (6a) und das Antriebsgehäuse (7b) mit der Antriebswelle (70) des Elektromotors (9) oder umgekehrt verbunden ist.

6. Vorrichtung nach Anspruch 5, **dadurch gekennzeichnet, dass**
die Antriebswelle (70) des Elektromotors (9), das Antriebsgelenk (7), der Kugelgewindetrieb (6), das Kugelschub-Gelenk (5), der Spanndorn (2) und die Spannhülse (3) in der Drehachse D angeordnet sind.

7. Vorrichtung nach Anspruch 5, **dadurch gekennzeichnet, dass**
die Antriebswelle (70) des Elektromotors (9), das Antriebsgelenk (7), der Kugelgewindetrieb (6) und das Kugelschub-Gelenk (5) in einer Linie außerhalb der Drehachse D angeordnet sind, wobei Mittel vorhanden sind zur Umlenkung der entlang dieser Linie ausführbaren Linearbewegung des Kugelgewindetriebs (6) in eine Linearbewegung des in der Drehachse D angeordneten Spanndorns (2) entlang der Drehachse D.

8. Vorrichtung nach Anspruch 1, **dadurch gekennzeichnet, dass** die Verdreheinrichtung (1a) einen Elektromotor (10) zum Antreiben der Welle (60) aufweist.

9. Vorrichtung nach Anspruch 1, **dadurch gekennzeichnet, dass** Mittel (20) vorhanden sind zur Bestimmung einer Nulllage der ersten Klappe (100) zur zweiten Klappe (200).

10. Vorrichtung nach Anspruch 1, **dadurch gekennzeichnet, dass** Mittel (13) vorhanden sind zur Ermittlung des Drehwinkels der Welle (60).

## Claims

1. Device for rotating and clamping a second flap (200) which can be moved relative to a first flap (100) about an axis of rotation D, comprising a rotating apparatus (1a) and a clamping apparatus (1b),
**characterized in that**
the clamping apparatus (1b) has, arranged along the axis of rotation D, a clamping sleeve (3) which can be clamped against the first flap (100) and the second flap (200) or a clamping sleeve (3) which can be clamped against the second flap (200) and is supported by the first flap (100) or a clamping sleeve (3) which can be clamped against the first flap (100) and is supported by the second flap (200);
wherein the clamping apparatus (1b) has a tensioning spindle (2), with a conical end, which can be inserted into the clamping sleeve (3); wherein the tensioning spindle (2) is embodied to cause a change in the diameter of the clamping sleeve, when the conical end is inserted into the clamping sleeve (3), in order to effect the clamping of the second flap (200) with respect to the first flap (100), and
the rotating apparatus (1a) has a drivable shaft (60), which is mounted on a flap (100, 200) so as to be able to rotate about the axis of rotation D and has a driver (50) connected to the other flap (200, 100) via a form fit.

2. Device according to Claim 1, **characterized in that** the clamping apparatus (1b) further has a drivable ball screw (6) having a spindle (6a) and, connected to the clamping sleeve (3), a rotation-locking means (4) supported by the first flap (100).

3. Device according to Claim 2, **characterized in that** the clamping apparatus (1b) further has a ball and socket thrust linkage (5) comprising a linkage housing (5c) and a ball (5a) mounted in the linkage housing (5c), wherein the ball (5a) is connected to the tensioning spindle (2), and the linkage housing (5c) is connected to the ball screw (6), or vice versa.

4. Device according to Claim 3, **characterized in that** an electric motor (9) having a drive shaft (70) for driving the ball screw (6) is present.

5. Device according to Claim 4, **characterized in that** the clamping apparatus (1b) further has a drive linkage (7) comprising a drive housing (7b) and a linkage (7a) mounted secured against rotation in the drive housing (7b) and displaceably in the longitudinal direction of the drive housing (7b), wherein the linkage (7a) is connected to the spindle (6a), and the drive housing (7b) is connected to the drive shaft (70) of the electric motor (9), or vice versa.

6. Device according to Claim 5, **characterized in that** the drive shaft (70) of the electric motor (9), the drive linkage (7), the ball screw (6), the ball and socket thrust linkage (5), the tensioning spindle (2) and the clamping sleeve (3) are arranged in the axis of rotation D.

7. Device according to Claim 5, **characterized in that** the drive shaft (70) of the electric motor (9), the drive linkage (7), the ball screw (6) and the ball and socket thrust linkage (5) are arranged in a line outside the axis of rotation D, wherein means are present for deflecting the linear movement of the ball screw (6), which can be effected along this line, into a linear movement of the tensioning spindle (2), arranged in the axis of rotation D, along the axis of rotation D.

8. Device according to Claim 1, **characterized in that** the rotating apparatus (1a) has an electric motor (10) for driving the shaft (60).

9. Device according to Claim 1, **characterized in that** means (20) are present for determining a zero position of the first flap (100) with respect to the second flap (200).

10. Device according to Claim 1, **characterized in that** means (13) are present for ascertaining the angle of rotation of the shaft (60).

## Revendications

1. Dispositif de rotation et de blocage d'un deuxième volet (200) mobile autour d'un axe de rotation D par rapport à un premier volet (100), comportant un dispositif de rotation (1a) et un dispositif de blocage (1b),
**caractérisé en ce que**
le dispositif de blocage (1b) comprend une douille de serrage (3) pouvant être serrée contre le premier volet (100) et le deuxième volet (200) ou pouvant être serrée contre le deuxième volet (200) et s'appuyant contre le premier volet (100) ou pouvant être serrée contre le premier volet (100) et s'appuyant contre le deuxième volet (200), et disposée le long de l'axe de rotation D ;
le dispositif de blocage (1b) comprenant un mandrin de serrage (2) pourvu d'une extrémité conique pouvant être inséré dans la douille de serrage (3) ;
le mandrin de serrage (2) étant réalisé pour produire une modification du diamètre de la douille de serrage lors d'un mouvement d'insertion de l'extrémité conique dans la douille de serrage (3), afin de provoquer le blocage du deuxième volet (200) par rapport au premier volet (100) et le dispositif de rotation (1a) comprenant un arbre (60) pouvant être entraîné et monté à rotation autour de l'axe de rotation D sur un volet (100, 200), lequel arbre étant pourvu d'un élément d'entraînement (50) relié à l'autre volet (200, 100) par le biais d'un engagement par coopération de formes.

2. Dispositif selon la revendication 1, **caractérisé en ce que** le dispositif de blocage (1b) comprend en outre une vis d'entraînement à billes (6) pouvant être entraînée et pourvue d'une broche (6a) et une fixation antirotation (4) reliée à la douille de serrage (3) et s'appuyant contre le premier volet (100).

3. Dispositif selon la revendication 2, **caractérisé en ce que** le dispositif de blocage (1b) comprend en outre un joint à glissière à bille (5) comportant un boîtier de joint (5c) et une bille (5a) logée dans le boîtier de joint (5c), la bille (5a) étant reliée au mandrin de serrage (2) et le boîtier de joint (5c) étant relié à la vis d'entraînement à billes (6) ou inversement.

4. Dispositif selon la revendication 3, **caractérisé en ce qu'**un moteur électrique (9) comprenant un arbre d'entraînement (70) pour entraîner la vis d'entraînement à billes (6) est prévu.

5. Dispositif selon la revendication 4, **caractérisé en ce que** le dispositif de blocage (1b) comprend en outre un joint d'entraînement (7) comportant un boîtier d'entraînement (7b) et un joint (7a) monté coulissant dans le boîtier d'entraînement (7b), de manière bloquée en rotation dans la direction longitudinale du boîtier d'entraînement (7b), le joint (7a) étant relié à la broche (6a) et le boîtier d'entraînement (7b) étant relié à l'arbre d'entraînement (70) du moteur électrique (9) ou inversement.

6. Dispositif selon la revendication 5, **caractérisé en ce que** l'arbre d'entraînement (70) du moteur électrique (9), le joint d'entraînement (7), la vis d'entraînement à billes (6), le joint à glissière à bille (5), le mandrin de serrage (2) et la douille de serrage (3) sont disposés dans l'axe de rotation D.

7. Dispositif selon la revendication 5, **caractérisé en ce que** l'arbre d'entraînement (70) du moteur électrique (9), le joint d'entraînement (7), la vis d'entraînement à billes (6) et le joint à glissière à bille (5) sont disposés sur une ligne à l'extérieur de l'axe de rotation D, des moyens étant prévus pour dévier le mouvement linéaire de la vis d'entraînement à billes (6) pouvant être effectué le long de cette ligne en un mouvement linéaire, le long de l'axe de rotation D, du mandrin de serrage (2) disposé dans l'axe de rotation D.

8. Dispositif selon la revendication 1, **caractérisé en ce que** le dispositif de rotation (1a) comprend un moteur électrique (10) pour entraîner l'arbre (60).

9. Dispositif selon la revendication 1, **caractérisé en ce que** des moyens (20) sont prévus pour déterminer une position zéro du premier volet (100) par rapport au deuxième volet (200).

10. Dispositif selon la revendication 1, **caractérisé en ce que** des moyens (13) sont prévus pour déterminer l'angle de rotation de l'arbre (60).
